(19) Europäisches Patentamt
European Patent Office
Office européen des brevets

(11) **EP 1 459 214 B1**

(12) **FASCICULE DE BREVET EUROPEEN**

(45) Date de publication et mention
de la délivrance du brevet:
**09.02.2011 Bulletin 2011/06**

(21) Numéro de dépôt: **02801177.3**

(22) Date de dépôt: **24.12.2002**

(51) Int Cl.:
**G06F 17/30** $^{(2006.01)}$

(86) Numéro de dépôt international:
**PCT/FR2002/004549**

(87) Numéro de publication internationale:
**WO 2003/056455 (10.07.2003 Gazette 2003/28)**

(54) **PROCEDE DE CARACTERISATION D UN SIGNAL SONORE**

VERFAHREN ZUR KENNZEICHNUNG EINES KLANGSIGNALS

METHOD FOR CHARACTERIZING A SOUND SIGNAL

(84) Etats contractants désignés:
**AT BE BG CH CY CZ DE DK EE ES FI FR GB GR IE IT LI LU MC NL PT SE SI SK TR**

(30) Priorité: **27.12.2001 FR 0116949**

(43) Date de publication de la demande:
**22.09.2004 Bulletin 2004/39**

(73) Titulaire: **IRCAM**
**75004 Paris (FR)**

(72) Inventeurs:
• **RODET, Xavier**
 **F-94120 Fontenay-sous-Bois (FR)**
• **WORMS, Laurent**
 **F-78140 Velizy-Villacoublay (FR)**
• **PEETERS, Geoffroy**
 **F-75020 Paris (FR)**

(74) Mandataire: **Pecher, Gilles et al**
**Cabinet Beau de Loménie**
**158, rue de l'Université**
**75340 Paris Cedex 07 (FR)**

(56) Documents cités:
**EP-A- 0 955 592     US-A- 5 918 223**

• **WOLD E ET AL: "Content-based classification, search, and retrieval of audio" IEEE MULTIMEDIA, IEEE COMPUTER SOCIETY, US, vol. 3, no. 3, 1996, pages 27-36, XP002154735 ISSN: 1070-986X**
• **GONZALEZ & K MELIH R: "Content Based Retrieval of Audio" PROCEEDINGS OF THE AUSTRALIAN TELECOMMUNICATION NETWORKS AND APPLICATIONS CONFERENCE, XX, XX, 1996, XP002154738**

**EP 1 459 214 B1**

## Description

L'invention concerne un procédé de caractérisation selon des paramètres spécifiques, d'un signal sonore évoluant selon le temps dans différentes bandes de fréquences.

Le domaine de l'invention est celui de la reconnaissance de signaux sonores appliquée en particulier à l'identification d'oeuvres musicales utilisées sans autorisation.

En effet, le développement des techniques de numérisation et du multimédia a provoqué une augmentation considérable de telles utilisations frauduleuses. Il en résulte une nouvelle difficulté pour les organismes chargés de collecter les droits d'auteur, puisqu'il faut être en mesure d'identifier ces utilisations en particulier sur les réseaux numériques interactifs tel Internet, afin d'effectuer de façon satisfaisante la perception et la répartition des rémunérations dues aux auteurs de ces oeuvres musicales.

Dans la suite, pour ne pas se limiter aux oeuvres musicales, on considérera plus généralement un signal sonore.

Le but de la présente invention est donc de constituer une base de données de signaux sonores, chaque signal sonore étant caractérisé par une empreinte de sorte que, étant donné un signal sonore inconnu que l'on caractérise de la même façon, on puisse effectuer une recherche et une comparaison rapides de l'empreinte de ce signal inconnu avec l'ensemble des empreintes de la base de données.

L'empreinte est constituée de paramètres spécifiques déterminés de la façon suivante.

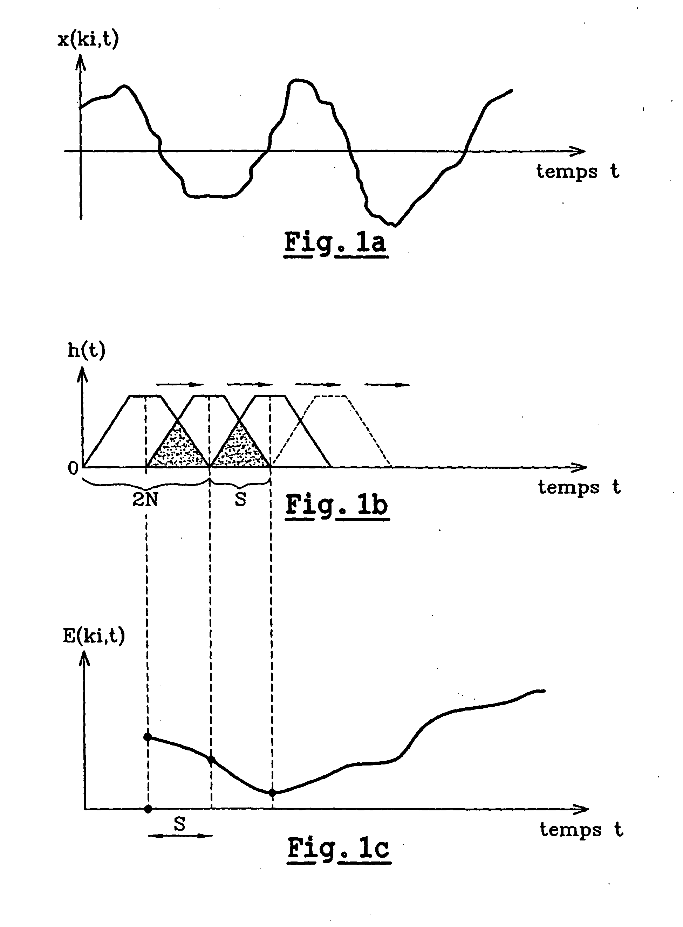

On décompose dans un premier temps le signal sonore dont l'amplitude x(t) varie avec le temps t, selon différentes bandes de fréquences k : x(k,t) est l'amplitude du signal sonore filtré dans la bande de fréquence k et représenté figure 1a).

On calcule, comme représenté figure 1c) l'énergie à court terme E(k,t) de ce signal sonore filtré à l'aide d'une fenêtre h(t) représentée figure 1b), ayant un support de 2N secondes. On réitère ce calcul en faisant glisser cette fenêtre toutes les S secondes.

Ces valeurs E(k,t) constituent des paramètres spécifiques d'un extrait de 2N secondes du signal sonore x(k, t) dans la bande de fréquences k.

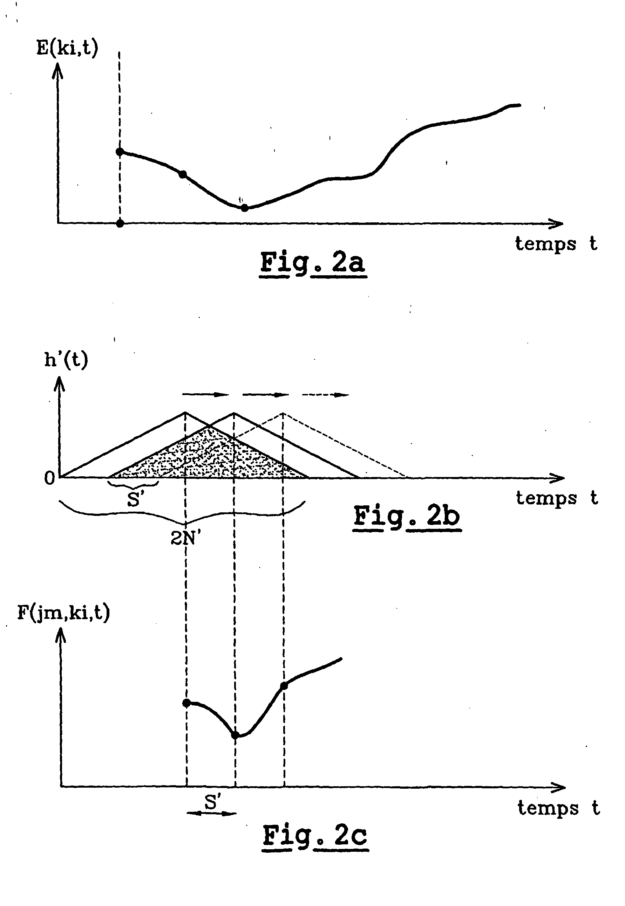

On peut obtenir d'autres paramètres en calculant pour différentes bandes de fréquences j, l'énergie de E(k,t) à l'aide d'une fenêtre h' (t) représentée figure 2b), ayant un support de 2N' secondes ; on réitère ce calcul en faisant glisser cette fenêtre toutes les S' secondes : on obtient F(j,k,t) représenté figure 2c). On normalise les valeurs F(j,k,t) par rapport à leur maximum de façon à les rendre indépendantes de l'amplitude du signal sonore.

Ainsi normalisées, ces valeurs constituent des paramètres spécifiques d'un extrait de 2N' secondes du signal sonore x(k,t) dans la bande de fréquences k.

On peut également calculer la phase de E(k,t) pour différentes bandes de fréquences j : on obtient P(j, k, t). On normalise les valeurs P (j , k, t) par rapport à une valeur de référence P(1, j, t) et on obtient alors d'autres paramètres spécifiques d'un extrait de 2N' secondes du signal sonore.

D'autres paramètres peuvent être ajoutés tels que la valeur moyenne de l'énergie E(k,t).

L'invention a pour objet un procédé de caractérisation selon des paramètres spécifiques, d'un signal sonore x(t) évoluant selon le temps t pendant une durée D dans différentes bandes de fréquences k et alors noté x(k,t), principalement caractérisé en ce qu'il consiste à mémoriser le signal x(t), à calculer l'énergie E(k,t) dudit signal x(k,t) pour chacune desdites bandes de fréquences k, k variant de 1 à K et selon une fenêtre temporelle h(t) d'une durée 2N, mémoriser les valeurs de l'énergie E(k,t) obtenues, ces valeurs constituant les paramètres spécifiques d'un extrait d'une durée 2N du signal sonore x(t) et à réitérer ce calcul à intervalles réguliers pour obtenir l'ensemble des paramètres spécifiques pour la durée D du signal sonore x(t).

Il consiste en outre à calculer et mémoriser l'énergie F(k,j,t) de E(k,t) pour des bandes de fréquences j, j variant de 1 à J, selon une fenêtre temporelle h'(t) d'une durée 2N', les JxK valeurs de l'énergie F(j,k,t) obtenues constituant les paramètres spécifiques d'un extrait d'une durée 2N' du signal sonore x(t) et à réitérer ce calcul à intervalles réguliers pour obtenir l'ensemble des paramètres spécifiques pour la durée D du signal sonore x(t).

Il consiste éventuellement à calculer la phase P(j,k,t) de l'énergie E(k,t) pour des bandes de fréquences j, j variant de 1 à J, j différent de k, et, à inclure les valeurs de la phase P(j,k,t) obtenues parmi les paramètres spécifiques du signal sonore x(t).

Il peut aussi consister à calculer pour chaque bande de fréquence j, la valeur moyenne de l'énergie E(k,t) sur 2N' secondes, à réitérer ce calcul à intervalles réguliers pour obtenir l'ensemble des paramètres spécifiques pour la durée D du signal sonore x(t) et à inclure les valeurs moyennes obtenues parmi les paramètres spécifiques du signal sonore x(t).

Selon une caractéristique, il consiste à considérer les paramètres spécifiques d'un signal sonore x(t) comme les composantes d'un vecteur représentatif de x(t), à positionner les vecteurs dans un espace à autant de dimensions que de paramètres, à définir des classes regroupant les vecteurs les plus proches et à enregistrer lesdites classes.

Les classes présentant des distances inter-classes et des distances intra-classes, le procédé consiste avantageusement à sélectionner parmi les paramètres spécifiques, les paramètres permettant d'obtenir des distances inter-classes relativement grandes devant les distances intra-classes et à enregistrer les paramètres sélectionnés.

L'invention concerne également un dispositif d'identification d'un signal sonore, caractérisé en ce qu'il comprend un serveur de base de données comprenant des moyens pour la mise en ouvre du procédé de caractérisation d'un signal sonore selon des paramètres spécifiques, tel que décrit précédemment et des moyens de recherche dudit signal sonore dans la base de données.

De préférence, les moyens de recherche comprennent des moyens de reconnaissance directe de la classe à laquelle ledit signal sonore appartient et des moyens de recherche de la classe par comparaison des paramètres spécifiques du signal sonore inconnu avec ceux de la base de donnée, la classe étant choisie, par exemple, par la méthode des plus proches voisins.

D'autres particularités et avantages de l'invention apparaîtront clairement à la lecture de la description faite à titre d'exemple non limitatif et en regard des dessins annexés sur lesquels :

les figures 1a), 1b) et 1c) représentent respectivement des courbes schématiques de variation d·un signal sonore $x(k_i, t)$ filtré dans une bande de fréquences $k_i$, d'une fenêtre de Hamming h(t) et de l'énergie $E(k_i, t)$ à court terme du signal $x(k_i, t)$,
les figures 2a), 2b) et 2c) représentent respectivement des courbes schématiques de variation de l'énergie $E(k_i, t)$ pour la bande de fréquence $k_i$, d'une fenêtre de Hamming h' (t) et de l'énergie $F(j_m, k_i, t)$ de $E(k_i, t)$ pour la bande de fréquences $j_m$,
la figure 3 illustre schématiquement un ensemble de vecteurs V[x(t)] constituant l'empreinte d'un signal x(k,t),
la figure 4 illustre schématiquement le stockage d'empreintes,
la figure 5 représente une classification des signaux sonores selon deux paramètres,
la figure 6 illustre une méthode de recherche d'un signal sonore par la méthode du plus proche voisin,
la figure 7 représente schématiquement un serveur de base de données de stockage des empreintes de signaux sonores.

Les signaux sonores que l'on traite selon ce procédé de caractérisation sont des signaux sonores enregistrés, notamment sur des disques compacts (Compact Disk en anglais).

On va considérer par la suite que le signal sonore x(t) est un signal numérique échantillonné à une fréquence d'échantillonnage fe, par exemple 11025 Hz correspondant au quart de la fréquence d'échantillonnage courante des disques compacts qui est de 44100 Hz.

On peut cependant caractériser un signal sonore analogique : il faut au préalable le convertir en un signal numérique au moyen d'un convertisseur analogique-numérique.

Le signal sonore x(k,t) représenté figure 1a) pour $k=k_i$ est donc un signal numérique échantillonné à la fréquence fe et obtenu après un filtrage dans une bande de fréquences $k_i$. Chaque valeur de ce signal numérique échantillonné est codée par exemple sur 16 bits. Les bandes de fréquences sont des bandes du spectre audible variant d'environ 20 Hz à 20kHz et découpé en K (k varie de 1 à K) bandes de fréquences, K=127 par exemple.

L'énergie à court terme E(k,t) représentée figure 1c) pour $k=k_i$, est calculée sur une fenêtre h (t) de 2N secondes, par exemple une fenêtre de Hamming ayant un support d'environ 23 ms représentée figure 1b).

E (k, t) est le carré du module d'une transformée du signal sonore échantillonné x(t) dans le plan temps-fréquence ou dans le plan temps-échelle. Parmi les transformées utilisables, figurent la transformée de Fourier, la transformée en cosinus, la transformée de Hartley et la transformée en ondelettes. Un banc de filtres passe-bandes réalise également une telle transformée. La transformée de Fourier à court terme permet une représentation temps-fréquence adaptée à l'analyse des signaux musicaux. Ainsi l'énergie E(k,t) s'écrit :

$$E(k,t) = \left| \sum_{n=-N}^{n=N} x(t + n/f_e) . h(n/f_e) . e^{-4i\pi kn/N} \right|^2$$

avec i tel que $i^2 = -1$

On fait glisser la fenêtre sur le signal sonore toutes les S secondes, par exemple toutes les 10 ms. E(k,t) sera ainsi échantillonné toutes les 10 ms : on aura $E(k, t_0)$ puis $E(k, t_1)$ avec $t_1=t_0+10$ ms etc.

On code ainsi toutes les S secondes le signal sonore x(t) par un vecteur à K composantes E(k,t), chacune de ces composantes codant l'énergie de 23 ms du signal sonore x(t) dans K bandes de fréquences.

On obtient d'autres paramètres en reproduisant en quelque sorte les calculs précédents et en les appliquant cette fois à E(k,t) comme représenté figure 2a) à figure 2c).

On filtre l'énergie E(k,t) dans J différentes bandes de fréquence : E(j,k,t) est l'énergie E(k, t) filtrée dans la bande de fréquences j, j variant de 1 à J avec par exemple J=51.

On calcule alors F(j,k,t) représentée figure 2c) pour k=$k_i$ et j=$j_m$, sur une fenêtre h'(t) de 2N' secondes, par exemple une fenêtre de Hamming ayant un support de 10 s. Ainsi, on peut écrire, avec i tel que $i^2 = -1$ :

$$F(j,k,t) = \left| \sum_{n=-N'}^{n=N'} E(k, t + n/f_{e'}).h'(n/f_{e'}).e^{-4i\pi jn/N'} \right|^2$$

Dans notre exemple, toutes les secondes (S' =1), le signal sonore x(t) est codé par 127x51 paramètres F(j,k,t), chaque réel F(j,k,t) représentant l'énergie de dix secondes (2N'=10) du signal d'énergie E(k,t) dans la bande de fréquence j.

De manière à rendre F(j,k,t) indépendant de l'amplitude du signal qui peut être plus ou moins fort, on rapporte ces valeurs à une valeur de référence, en l'occurrence la valeur maximale de $F_M$(j, k, t) pour tous les k et j considérés. On obtient ainsi KxJ paramètres F(j, k, t)/$F_M$(j, k, t).

On calcule en outre toutes les 2N' secondes, la phase de l'énergie E(k,t) dans chacune des bandes de fréquences j: P(j,k,t).

Pour cela, on calcule l'argument de la transformée de Fourrier de E(k,t) dans chacune des bandes de fréquence j :

$$P(j,k,t) = Arg \left| \sum_{n=-N'}^{n=N'} E(k, t + n/f_{e'}).h'(n/f_{e'}).e^{-4i\pi jn/N'} \right|$$

Comme précédemment, on rapporte ces valeurs à une valeur de référence, en l'occurrence la valeur de P(j, k,t) pour la seconde bande dé fréquences (j=1) considérée car la référence temporelle de l'échantillon est inconnue : on ne connaît pas l'origine des temps. Pour cela, on calcule les phases rapportées φ(j, k, t) par les formules suivantes :

$$\varphi(1,k,t) = P(1,k,t)$$

$$\varphi(j,k,t) = P(j,k,t) - P(1,k,t). \frac{f(k)}{f(1)} \text{ , pour } k>1.$$

où les f(k) sont les fréquences centrales des canaux k. On obtient ainsi KxJ paramètres correspondant aux valeurs de la phase rapportée φ(j,k,t).

On peut également considérer d'autres paramètres notamment, les valeurs moyennes de l'énergie E(k,t) sur 2N' secondes et ce pour chaque bande de fréquences j : E(j, k, t).

L'ensemble de ces paramètres normalisés définissent à intervalles réguliers, une empreinte que l'on peut considérer comme un vecteur V(x(t)). L'ensemble des paramètres normalisés par exemple F(j, k, t) /$F_M$ et P(j, k, t) -P(j, 1, t) définissent toutes les S' secondes, une empreinte que l'on peut considérer comme un vecteur V(x (t)) à 2xKxJ dimensions (2x127x51 soit environ 13000 dans notre exemple), une dimension par paramètre, chaque vecteur caractérisant un extrait de 2N' secondes du signal sonore x(t), 10 secondes dans notre exemple.

On réitère cette caractérisation toutes les S' secondes, toutes les secondes par exemple (S' =1).

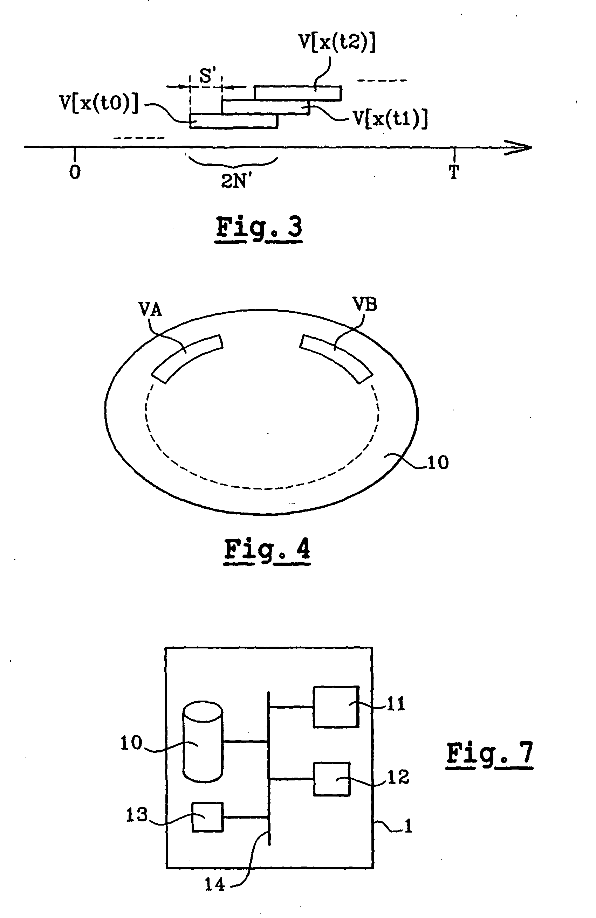

Comme représenté figure 3, un signal x(t) durant T secondes est finalement caractérisé par L vecteurs V, L étant environ égal à T/S'.

Pour un signal sonore durant 10 mn soit 600s, on obtient 600 vecteurs c'est-à-dire 600x2xJxK paramètres.

Ces vecteurs sont mémorisés dans la zone de stockage 10 d'une base de données hébergée sur un serveur ou sur un disque compact. On a représenté figure 4 l'ensemble des vecteurs V d'un signal ou d'une oeuvre A par VA, de même VB pour une oeuvre B, etc.

Il est souhaitable de réduire le nombre de composantes de ces vecteurs c'est-à-dire le nombre de paramètres de façon à obtenir un vecteur ou une empreinte de taille plus réduite en vue de son stockage dans la base de données.

De plus, lorsqu'il s'agira de comparer l'empreinte d'un signal sonore inconnu avec celles de la base de données, il sera souhaitable que le nombre de paramètres à comparer soit réduit pour que cette recherche soit effectuée rapidement.

Or ces paramètres n'apportent pas tous la même quantité d'information, certaines pouvant être redondantes voire inutiles. C'est pourquoi on sélectionne les paramètres les plus pertinents parmi tous les paramètres, par un calcul d'information mutuelle présenté notamment dans la publication PROC. ICASSP' 99, Phoenix, Arizona, USA, Mars 1999 H.YANG, S.VAN VUUREN, H.HERMANSKY, « Relevancy of Trime-Frequency Features for Phonetic Classification Measured by Mutual Information ». On limite ainsi K à $K_1$ et J à $J_1$.

On va présenter une méthode de sélection de ces paramètres.

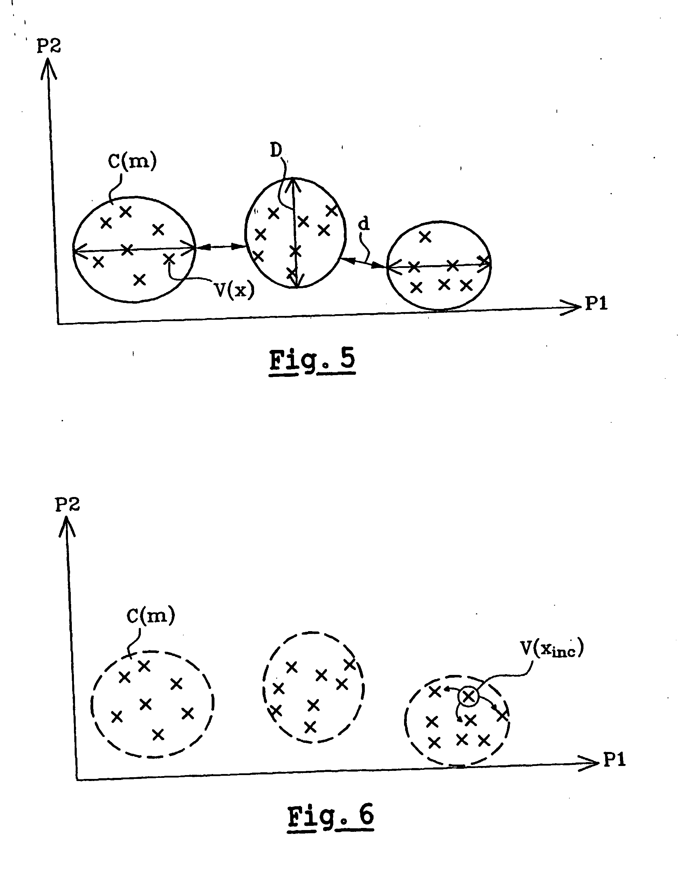

Chacune des empreintes de ces signaux sonores c'est-à-dire chacun de ces vecteurs est classé dans un espace R à N dimensions, N étant le nombre de composantes des vecteurs. Pour des raisons de simplification, un exemple de classification pour des vecteurs à 2 dimensions P1 et P2 est représenté figure 5.

On définit des classes C(m) regroupant les vecteurs par proximité, m variant de 1 à M. On peut par exemple décider qu'une classe correspond à une oeuvre musicale : dans ce cas M est le nombre d'oeuvres musicales mémorisées dans la base de données.

Il résulte du calcul de l'information mutuelle entre ces classes C(m) et les paramètres, que la pertinence des paramètres est liée aux distances inter et intra classes : des paramètres pertinents garantissent des distances inter-classes d relativement grandes comparées aux distances intra-classes D.

En ne retenant que les paramètres pertinents, on définit ainsi $K_1$ et $J_1$.

On peut par exemple considérer cinq ($K_1$=5) bandes de fréquences respectivement centrées sur 344 Hz, 430 Hz, 516 Hz, 608 Hz et 689 Hz.

Des essais ont été effectués en prenant $J_1 = 3$.

Les classes C(m) sont alors constituées à partir des vecteurs Vq(x) ne comportant plus que $2 \times K_1 \times J_1$ composantes.

On va donner un exemple pour $K_1$=5 et $J_1$=3 , de la taille mémoire d'une base de données contenant 1000 heures de musique et en considérant comme paramètres E(k,t) et F(j,k,t), chacun de ces paramètres étant codé sur 4 octets.

Les paramètres E(k,t) calculés toutes les 10 ms occupent 1000x3600x100x5x4 octets soit environ 7 Giga octets.

Les paramètres F(j,k,t) calculés toutes les secondes occupent 1000x3600x3x5x4 octets soit environ 200 Méga octets.

Ces paramètres sont associés aux références des signaux sonores ; si l'on considère que les références contiennent 100 caractères codés chacun sur un octet, ces références occupent 1000x10x100 octets soit environ 1 Méga octet.

Une telle base de données occupera finalement environ 7 Giga octets.

Lorsqu'on souhaite identifier un signal sonore inconnu, on en établit d'abord l'empreinte, référencée V(xinc) à la figure 6, comme décrit précédemment, sachant que le signal sonore inconnu peut être une oeuvre musicale complète ou un extrait de cette oeuvre.

La recherche de la classe de cette empreinte dans la base de données consiste alors selon une méthode classique illustrée figure 6, à comparer les paramètres de cette empreinte V(xinc) à ceux des empreintes de la base de donnée. Les empreintes les plus proches, dites les plus proches voisins, définissent la classe de la façon suivante : la classe est celle de la majorité des plus proches voisins.

Un serveur de base de données 1 est schématiquement représenté figure 7. Il comprend une zone de stockage 10 des données de la base dans laquelle sont mémorisées les empreintes des signaux sonores assorties de leurs références. Il comprend en outre une mémoire 11 dans laquelle sont stockés les programmes de caractérisation et de recherche précédemment décrits, un processeur 12 assorti de mémoires de travail pour mettre en oeuvre ces programmes. Il comprend bien sûr une interface d'entrée-sortie 13 et un bus 14 reliant ces divers éléments entre eux.

Lorsqu'il s'agit de rentrer dans la base de données 1, de nouveaux signaux sonores, l'interface 13 reçoit le signal x(t) assorti de ses références ; s'il s'agit seulement d'un signal inconnu à identifier, l'interface 13 reçoit seulement le signal x(t) inconnu. En sortie, l'interface 13 fournit une réponse à la recherche d'un signal inconnu. Cette réponse est négative si le signal inconnu n'existe pas dans la zone de stockage 10 ; si le signal a été identifié, la réponse comporte les références du signal identifié.

**Revendications**

1. Procédé de caractérisation selon des paramètres spécifiques, d'un signal sonore x(t) évoluant selon le temps t pendant une durée D dans différentes bandes de fréquences k et alors noté x(k,t), **caractérisé en ce qu'**il consiste à mémoriser le signal x(t), à calculer et mémoriser l'énergie E(k,t) dudit signal x(k,t) pour chacune desdites bandes de fréquences k, k variant de 1 à K et selon une fenêtre temporelle h(t) d'une durée 2N, et dans un second temps, à calculer et mémoriser l'énergie F(k, j, t) et la phase rapportée φ(j, k, t) de E(k, t) pour des bandes de fréquences j, j variant de 1 à J, selon une fenêtre temporelle h' (t) d'une durée 2N', les JxK valeurs de l'énergie F(j,k,t) et de la phase rapportée φ(j, k, t) ainsi obtenues constituant les paramètres spécifiques d'un extrait d'une durée 2N' du signal sonore x(t) et à réitérer ce calcul à intervalles réguliers pour obtenir l'ensemble des paramètres spécifiques pour la durée D du signal sonore x(t).

**2.** Procédé selon la revendication 1, **caractérisé en ce qu'**il consiste à calculer pour chaque bande de fréquence j, la valeur moyenne de l'énergie E(k,t) sur 2N' secondes, à réitérer ce calcul à intervalles réguliers pour obtenir l'ensemble des paramètres spécifiques pour la durée D du signal sonore x(t) et à inclure les valeurs moyennes obtenues parmi les paramètres spécifiques du signal sonore x(t).

**3.** Procédé selon l'une des revendications 1 ou 2, **caractérisé en ce qu'**il consiste à considérer les paramètres spécifiques d'un signal sonore x(t) comme les composantes d'un vecteur représentatif de x(t), à positionner les vecteurs dans un espace à autant de dimensions que de paramètres, à définir des classes regroupant les vecteurs les plus proches et à enregistrer lesdites classes.

**4.** Procédé selon la revendication précédente, **caractérisé en ce que** les classes présentent des distances inter-classes et des distances intra-classes et **en ce qu'**il consiste à sélectionner parmi les paramètres spécifiques, les paramètres permettant d'obtenir des distances inter-classes relativement grandes devant les distances intra-classes et à enregistrer les paramètres sélectionnés.

**5.** Dispositif d'identification d'un signal sonore, **caractérisé en ce qu'**il comprend un serveur de base de données comprenant des moyens pour la mise en oeuvre du procédé de caractérisation d'un signal sonore selon des paramètres spécifiques, selon l'une quelconque des revendications précédentes et des moyens de recherche dudit signal sonore dans la base de données.

**6.** Dispositif selon la revendication précédente prise en combinaison avec la revendication 3 ou 4, **caractérisé en ce que** les moyens de recherche comprennent des moyens de reconnaissance de la classe à laquelle ledit signal sonore appartient et des moyens de comparaison, par la méthode du plus proche voisin, des paramètres spécifiques du signal sonore inconnu avec les paramètres spécifiques de la base de données.

**Claims**

**1.** A method for characterizing, according to specific parameters, a sound signal x(t) evolving over the time t during a duration D into different bands of frequencies k and then recorded x(k, t), **characterized in that** it consists of storing the signal x(t), of calculating and storing the energy E(k, t) of said signal x(k, t) for each of said bands of frequencies k, k varying from 1 to K and according a temporal window h(t) of a duration of 2N, and in a second step, of calculating and storing the energy F(k, j, t) and the related phase φ(j, k, t) of E(k, t) for the bands of frequencies j, j varying from 1 to J, using a temporal window h'(t) of a duration of 2N', the JxK values of the energy F(j, k, t) and of the related phase φ(j, k, t) thus obtained constituting the specific parameters of an extract of a duration of 2N' of the sound signal x(t) and of reiterating said calculation at regular intervals in order to obtain the set of the specific parameters for the duration D of the sound signal x(t).

**2.** The method according to Claim 1, wherein it consists of calculating for each frequency band j the mean value of the energy E(k, t) over 2N' seconds, of reiterating said calculation at regular intervals in order to obtain the set of specific parameters for the duration D of the sound signal x(t) and of including the mean values obtained among the specific parameters of the sound signal x(t).

**3.** The method according to one of Claims 1 or 2, wherein it consists of taking into account the specific parameters of a sound signal x(t) as the components of a vectors representative of x(t), of positioning the vectors in a space of as many dimensions as there are parameters, of defining the classes grouping the most proximate vectors and of recording said classes.

**4.** The method according to the preceding claim, wherein the classes have inter-class distances and intra-class distances and that it consists of selecting from among the specific parameters, those parameters making it possible to obtain relatively large inter-class distances vis-à-vis the intra-class distances and of recording the selected parameters.

5. A device for identifying a sound signal, wherein it comprises a database server comprising the means for implementing the method for characterizing a sound signal according to specific parameters according to any one of the above claims and means for searching for said sound signal in the database.

6. The device according to the above claim taken in combination with Claim 3 or 4, wherein the means for searching comprise means for recognizing the class to which said sound signal belongs and the means for comparing, by the method of the nearest neighbor algorithm, specific parameters of the unknown sound signal with the specific parameters of the database.

## Patentansprüche

1. Verfahren zur Charakterisierung entsprechend spezifischer Parameter, eines sich über die Zeit t während einer Zeitdauer D in unterschiedlichen Frequenzbändern k ändernden und dann mit x (k, t) bezeichneten Schallsignals x (t), **dadurch gekennzeichnet, daß** es darin besteht, das Signal x (t) zu speichern, die Energie E (k, t) des Signals x (k, t) für ein jedes der Frequenzbänder k, wobei k von 1 bis K variiert, und entsprechend einem Zeitfenster h (t) mit einer Dauer 2N zu berechnen und zu speichern und in einem zweiten Schritt die Energie F (k, j, t) sowie die bezogene Phase φ(j, k, t) von E (k, t) für Frequenzbänder j, wobei j von 1 bis J variiert, entsprechend einem Zeitfenster h' (t) mit einer Dauer 2N' zu berechnen und zu speichern, wobei die auf diese Weise erhaltenen JxK Werte der Energie F (j, k, t) und der bezogenen Phase φ(j, k, t) die spezifischen Parameter eines Auszugs mit einer Dauer 2N' des Schallsignals x (t) darstellen, und diese Berechnung in regelmäßigen Abständen zu wiederholen, um alle spezifischen Parameter für die Dauer D des Schallsignals x (t) zu erhalten.

2. Verfahren nach Anspruch 1, **dadurch gekennzeichnet, daß** es darin besteht, für jedes Frequenzband j den Mittelwert der Energie E (k, t) über 2N' Sekunden zu berechnen, diese Berechnung in regelmäßigen Abständen zu wiederholen, um alle spezifischen Parameter für die Dauer D des Schallsignals x (t) zu erhalten, und die erhaltenen Mittelwerte in die spezifischen Parameter des Schallsignals x (t) aufzunehmen.

3. Verfahren nach einem der Ansprüche 1 oder 2, **dadurch gekennzeichnet, daß** es darin besteht, die spezifischen Parameter eines Schallsignals x (t) als die Komponenten eines für x (t) repräsentativen Vektors zu betrachten, die Vektoren in einem Raum mit so vielen Dimensionen wie es Parameter gibt zu positionieren, Klassen zu definieren, die die nächstgelegenen Vektoren zusammenfassen, und die Klassen zu speichern.

4. Verfahren nach dem vorhergehenden Anspruch, **dadurch gekennzeichnet, daß** die Klassen Interklassenabstände und Intraklassenabstände aufweisen und daß es darin besteht, unter den spezifischen Parametern die Parameter auszuwählen, die ermöglichen, Interklassenabstände zu erhalten, die gegenüber den Intraklassenabständen retativ groß sind, und die ausgewählten Parameter zu speichern.

5. Vorrichtung zur Identifikation eines Schallsignals, **dadurch gekennzeichnet, daß** sie einen Datenbankserver umfaßt, der Mittel für die Durchführung des Verfahrens zur Charakterisierung eines Schallsignals entsprechend spezifischer Parameter nach einem der vorhergehenden Ansprüche sowie Mittel zur Suche des Schallsignals in der Datenbank umfaßt.

6. Vorrichtung nach dem vorhergehenden Anspruch in Kombination mit Anspruch 3 oder 4, **dadurch gekennzeichnet, daß** die Suchmittel Mittel zur Erkennung der Klasse, zu welcher das Schallsignal gehört, sowie Mittel zum Vergleichen der spezifischen Parameter des unbekannten Schallsignals, mittels der Nächster-Nachbar-Methode, mit den spezifischen Parametern der Datenbank umfaßt.

**Fig. 1a**

**Fig. 1b**

**Fig. 1c**

E(ki,t)

temps t

**Fig. 2a**

h'(t)

0

S'

2N'

temps t

**Fig. 2b**

F(jm,ki,t)

S'

temps t

**Fig. 2c**

V[x(t2)]

S'

V[x(t0)]

V[x(t1)]

0

2N'

T

**Fig. 3**

VA

VB

10

**Fig. 4**

10

11

12

13

14

1

**Fig. 7**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H.YANG ; S.VAN VUUREN ; H.HERMANSKY.** Relevancy of Trime-Frequency Features for Phonetic Classification Measured by Mutual Information. *PROC. ICASSP' 99, Phoenix, Arizona, USA,* Mars 1999